# EUROPEAN PATENT SPECIFICATION

(11) **EP 4 512 505 B1**
(45) Date of publication and mention of the grant of the patent: **08.10.2025**
(21) Application number: 24192887.8
(22) Date of filing: 05.08.2024
(51) Int. Cl.: B01D 45/06, D21B 1/12, F22B 37/26, F26B 17/10

(54) **STEAM SEPARATOR**
DAMPFABSCHEIDER
SÉPARATEUR DE VAPEUR

(30) Priority: 23.08.2023 SE 2330364
(43) Date of publication of application: 26.02.2025
(73) Proprietor: VALMET AB, 851 94 Sundsvall (SE)
(72) Inventor: WETIND, Ruben, 865 92 Alnö (SE)
(74) Representative: Becker, Eberhard

(56) References cited:
- EP-A1- 0 158 891
- WO-A1-2008/034681

## Description

### TECHNICAL FIELD

The present invention relates to the field of production of pulp from cellulosic material, and more specifically to a steam separator by means of which steam can be separated from a flow of fluid and cellulosic material.

### BACKGROUND

Pulp production processes often comprise steam separation steps in which fluid such as steam is separated from a flow comprising fluid and cellulosic material (such as wood chips/fibers), which flow is conveyed in a conduit, such as a blow line.

SE544371C2 discloses a steam separator for pulp production processes. The steam separator comprises first and second flow pipes, wherein the first flow pipe is inserted a distance into the second flow pipe such that a gap is provided between the outer circumference of the first flow pipe and the inner circumference of the second flow pipe, and wherein at least one steam transport tube each has a steam entrance opening which is arranged as a through-hole through the wall of the second flow pipe.

EP 0 158 891 A1 relates to pre-separators for separating water form steam.

### SUMMARY

An object of the invention is to provide a steam separator with further improved performance in terms of improved separation and reduced amount of fibers in the separated steam.

These and other objects are achieved by the present invention by means of a steam separator according to the independent claim.

According to the invention, there is provided a steam separator for separating steam from a stream comprising steam and cellulosic material (such as cellulosic or wood fibers). The steam separator comprises a substantially tubular or hollow body through which the stream is conveyed in a longitudinal flow direction, said body comprising first, second and third longitudinally consecutive portions, and at least one steam discharge conduit. A downstream end of the first portion (facing the second portion) has a first flow area being smaller than a second flow area of an upstream end of the second portion (facing the first portion). A downstream end of the second portion (facing the third portion) has a third flow area being smaller than a fourth flow area of an upstream end of the third portion (facing the second portion). At least part of the at least one steam discharge conduit is arranged radially/laterally outside the first portion, each steam discharge conduit being provided with its inlet connected to the upstream end of the second portion to receive steam therefrom.

**In** other words, the steam separator comprises a body which may be substantially tubular or hollow and may be described as a conduit. The body comprises a first portion, a second portion and a third portion arranged consecutive in said order. The steam separator further comprises at least one steam discharge conduit for discharging separated steam from the stream/main flow flowing through the steam separator body. At the downstream end of the first portion / the upstream end of the second portion, the (first) flow area of the first portion is smaller than the (second) flow area of the second portion such that the flow area increases at the transition from the first portion to the second portion. At the downstream end of the second portion / the upstream end of the third portion, the (third) flow area of the second portion is smaller than the (fourth) flow area of the third portion such that the flow area increases at the transition from the second portion to the third portion. The at least one steam discharge conduit is each provided with an inlet connected to the second portion at the downstream end of the first portion / the upstream end of the second portion radially/laterally outside the first portion. The at least one steam discharge conduit and/or its inlet may be substantially longitudinally directed. The body may be substantially cylindrical but may alternatively have a cross-section of other shapes such as quadratic or elliptical.

The invention is based on the insight that a rapid increase/step in the flow area downstream of the inlet of the steam discharge conduit(s) results in a locally circulating "backstep" flow (comprising steam and fibers) at the step which will follow the main stream in a downstream direction. This may reduce the amount of fibers which follow the steam flow into the steam discharge conduit(s).

**In** embodiments, the second portion is at least partly tapering towards the third portion. The second portion may comprise an upstream portion tapering towards the third portion and a downstream portion of substantially constant flow area. Such embodiments may be advantageous in terms of steam separation since the tapering shape may increase the flow to the steam discharge conduit(s).

In embodiments, a ratio between the first flow area and the third flow area is within a range 0.8 -1.2, such as 0.9-1.1. The first and third flow areas may be substantially equal. Embodiments where the first and third flow areas are substantially equal or within the above-described ranges are advantageously combined with the above-described embodiments comprising a tapering second portion. Such a combination of embodiments may provide advantageous separation performance and/or reduced levels of fibers in the separated steam.

In embodiments, a ratio between the fourth flow area and the second flow area is within a range 0.8 -1.2, such as 0.9-1.1. The fourth and second flow areas may be substantially equal.

In embodiments, the first portion and the at least one steam discharge conduit are formed by concentric/coaxial inner and outer tubes. The inner and outer tubes may be only partially overlapping (as seen in the longitudinal direction). A gap is formed between the outer circumference of the inner tube and the inner circumference of the outer tube, in which gap steam can flow in an upstream direction (i.e. in the opposite direction compared to the main flow in the inner tube. Thus, the at least one steam discharge conduit is formed by a gap/space between the inner and outer tubes. The inner and outer tubes may be referred to as inner and outer pipes. The inner and outer tubes or pipes may have substantially circular cross sections.

In embodiments, the at least one steam discharge conduit may be formed only along a respective portion of the circumference of the inner/outer tube. In other words, the steam discharge conduit(s) do not necessarily need to be formed by the whole space between the inner and outer tubes. For instance, the steam separator may comprise two steam discharge conduits, each having an angular extension of 60-170 degrees. Such embodiments allow for structural reinforcement between the inner and outer tubes.

In embodiments, the at least one steam discharge conduit each comprises an outlet being formed as a through hole through the outer tube, and wherein a respective steam transport conduit is connected to each outlet. In embodiments comprising more than one steam transport conduit, such as at least two steam transport conduits, the steam transport conduits are preferably merged or joined together into a common steam manifold tube, which can lead the separated steam to a suitable recipient device, such as a chip bin.

In embodiments, the third portion is formed integrally with said outer tube. In such embodiments, the second portion may be formed integrally with the inner tube as an insert which is arranged within the outer tube. Such embodiments are advantageous since a simple and easy to assemble construction is provided.

In embodiments, the first portion is provided with throttling means, for instance by tapering towards the second portion along at least part of a longitudinal length of the first portion. For example, the inner tube may have a tapering shape in the direction towards the second portion. This embodiment is advantageously combined with the above-described embodiment comprising concentric inner and outer tubes. In such a combined embodiment, where the outer tube is cylindrical or at least tapers at a slower rate than the inner tube, the at least one steam discharge conduit expands towards the second portion which may result in increased steam flow into the steam discharge channel and/or increased separation. Further, the throttling effect per se may provide an enhanced separating effect.

The features of the embodiments described above are combinable in any practically realizable way to form embodiments having combinations of these features.

### BRIEF DESCRIPTION OF THE DRAWINGS

Above discussed and other aspects of the present invention will now be described in more detail using the appended drawings, which show presently preferred embodiments of the invention, wherein:
fig. 1 shows a schematic perspective view of an embodiment of the steam separator according to the invention;
fig. 2 shows a cross section view of part of the steam separator in fig. 1, the cross-section being taken in a horizontal plane through the steam separator body and the steam transport conduits;
fig. 3 shows the same cross section view as in fig. 2, but with schematic flow stream arrows, and
fig. 4 shows a cross section view of an alternative embodiment similar to that in figs. 1-3.

### DETAILED DESCRIPTION

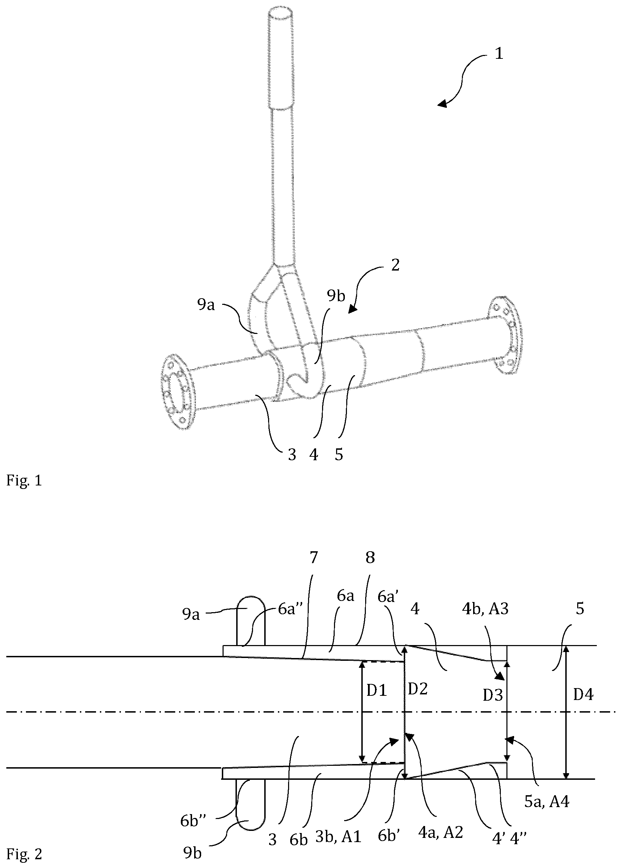

Fig. 1 shows a schematic perspective view of an embodiment of the steam separator according to the invention. The steam separator 1 comprises a tubular/hollow body 2 through which the stream is conveyed in a longitudinal flow direction (to the right in the figure). The body comprises first, second and third longitudinally consecutive portions 3, 4, 5 (each having a circular cross-section) and at least one steam discharge conduit (ref. 6, see fig. 2). In fig. 1, further downstream portions of the body 2 (a tapering portion and a cylindrical portion) are shown to the right in the figure, and flanges at opposite ends of the steam separator for connecting the steam separator for example to conduits. A respective steam transport conduit 9a, 9b is connected to the steam discharge conduits.

Fig. 2 shows a cross section view of part of the steam separator in fig. 1, the cross-section being taken in a horizontal plane through the steam separator body 2 and the steam transport conduits 9a ,9b (from above as seen in fig. 1). In fig. 2, the flanges and the above-described downstream portions of body 2 are not shown. As can be seen in fig. 2, the downstream end 3b of the first portion 3 facing the second portion 4 has a first flow area A1 which is smaller than a second flow area A2 of an upstream end 4a of the second portion 4 facing the first portion 3. A downstream end 4b of the second portion 4 faces the third portion 5 and has a third flow area A3 which is smaller than a fourth flow area A4 of an upstream end 5a of the third portion 5 facing the second portion 4. Thus, sudden increases in the flow area ("steps") are formed at 3b, 4a and also at 4b, 5a.

The first flow area A1 is substantially equal to the third flow area A3, i.e. the diameters D1 and D3 are substantially equal.

The third portion 5 is formed as part of the outer tube 8 and the inner walls of the second portion are formed as an insert in the outer tube. The fourth flow area A4 and the second flow area A2 are substantially equal, i.e. the diameters D4 and D2 are substantially equal.

Two steam discharge conduits 6a, 6b are arranged radially outside the first portion 3, each steam discharge conduit 6a, 6b being provided with its inlet 6a', 6b' connected to the upstream end 4a of the second portion 4 to receive steam therefrom.

The first portion 3 and the two steam discharge conduits 6a, 6b are formed by (partly concentric) inner and outer tubes/pipes 7, 8. The steam discharge conduits 6a, 6b are formed by the gap between the outer circumference of the inner tube 7 and the inner circumference of the outer tube 8. The two steam discharge conduits are separate from each other however, by having a limited angular extension. The steam discharge conduits each comprises an outlet 6a", 6b" being formed as a through hole through the outer tube 8. Steam transport conduits 9a, 9b are connected to respective outlet. As can be seen in fig. 1, the steam transport conduits 9a, 9b are joined together into a common steam manifold tube, which can lead the separated steam to a suitable recipient device, such as a chip bin.

The part of inner tube 7 extending into outer tube 8 is tapering towards the second portion 4 such that a throttling effect is achieved in the first portion 3. The second portion 4 comprises an upstream portion 4' tapering towards the third portion 5 and a downstream portion 4" of constant diameter/flow area.

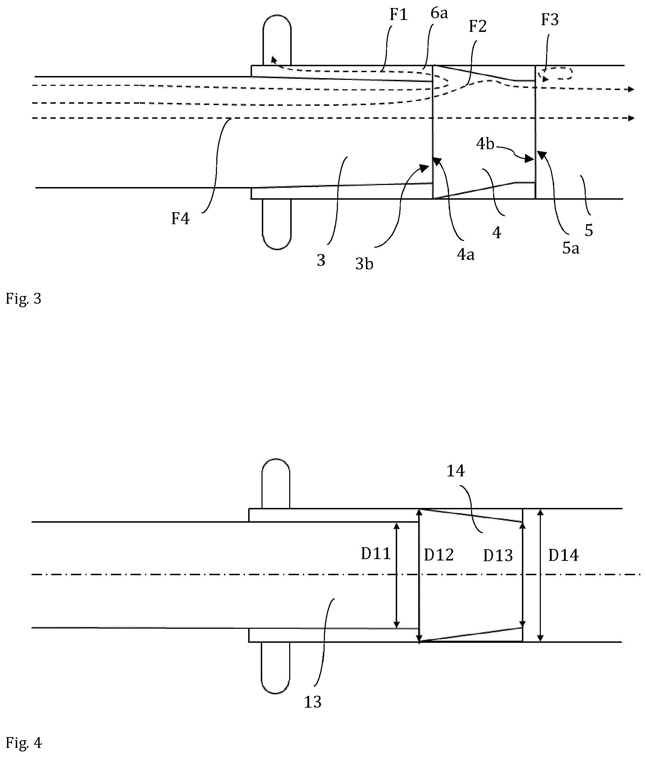

Fig. 3 shows the same cross section view as in fig. 2, but with schematic flow stream arrows.

During operation, the stream comprising steam and cellulosic material (fibers) enters the first portion 3 of the body (the inner tube 7) to the left in the figure and leaves the first portion at the downstream end 3b thereof and enters the second portion 4. At this position, the flow area/diameter of the upstream end 4a of the second portion is larger than the flow area/diameter of the downstream end 3b of the first portion, which means that the flow can expand radially, and since steam is compressible it will expand quickly. In this quick expansion and redirection of flow, the heavier particles such as cellulosic fibers will mainly follow the main direction of the tube flow due to momentum.

Thus, at the upstream end 4a of the second portion, the flow comprises mainly steam, which can travel backwards through the steam discharge conduits (6a for example) and then enters the steam transport conduits 9a, 9b for transporting away the steam. This flow of steam is illustrated by the uppermost flow arrow F1 which enters 6a. Closer to the center of the steam separator, the stream is less affected by the step increase in diameter at 3b, 4a and a stream of steam and fibers will flow as illustrated by the second flow arrow F2. When the stream leaves the second portion 4 at the downstream end 4b thereof and enters the third portion 5, the flow area/diameter of the upstream end 5a of the third portion is larger than the flow area/diameter of the downstream end 4b of the second portion. A local recirculating "backflow" F3 of steam and fibers will be formed which will follow the main flow in a downstream direction.

In the center of the steam separator, the stream comprising steam and cellulosic material is largely unaffected by the step increase in diameter at 3b, 4a and at 4b, 5a. This is illustrated by the fourth flow arrow F4. The flow arrows are only shown in the upper part of the steam separator, but it is understood that the flow is normally symmetrical.

Fig. 4 shows a cross section view of an alternative embodiment of a steam separator according to the invention. The cross-section view corresponds to that in fig. 2-3. This embodiment corresponds to the embodiment in fig. 1-3 except in that the first portion 13 is not tapering and in that the second portion 14 is tapering along its whole length. The rest of the description above regarding fig. 1-3 (including the operation of the steam separator) applies also to fig. 4. It is noted that the first flow area is substantially equal to the third flow area, i.e. the diameters D11 and D13 are substantially equal, and the fourth flow area and the second flow area are also substantially equal, i.e. the diameters D14 and D12 are substantially equal.

The description above and the appended drawings are to be considered as non-limiting examples of the invention. The person skilled in the art realizes that several changes and modifications may be made.

For example, the steam discharge conduit(s) do not necessarily need to be formed by concentric tubes, or even integrally with the body of the steam separator but may on the contrary be separate parts. Furthermore, the number of steam discharge conduits and steam transport conduits may be varied.

## Claims

1. A steam separator (1) for separating steam from a stream comprising steam and cellulosic material, said steam separator comprising:
- a substantially tubular body (2) through which the stream is conveyed in a longitudinal flow direction, said body comprising first, second and third longitudinally consecutive portions (3, 4, 5), and
- at least one steam discharge conduit (6a, 6b),
wherein a downstream end (3b) of the first portion (3) facing the second portion (4) has a first flow area (A1) being smaller than a second flow area (A2) of an upstream end (4a) of the second portion (4) facing the first portion (3),
wherein a downstream end (4b) of the second portion (4) facing the third portion (5) has a third flow area (A3) being smaller than a fourth flow area (A4) of an upstream end (5a) of the third portion (5) facing the second portion (4), and
wherein the at least one steam discharge conduit (6a, 6b) is arranged radially outside the first portion (3), each steam discharge conduit (6a, 6b) being provided with its inlet (6a') connected to the upstream end (4a) of the second portion (4) to receive steam therefrom.

2. The steam separator according to claim 1, wherein the second portion (4) is at least partly tapering towards the third portion.

3. The steam separator according to claim 1, wherein the second portion (4) comprises an upstream portion (4') tapering towards the third portion (5) and a downstream portion (4") of substantially constant flow area.

4. The steam separator according to any of the preceding claims, wherein a ratio between the first flow area (A1) and the third flow area (A3) is within a range 0.8 -1.2, such as 0.9-1.1.

5. The steam separator according to any of the preceding claims, wherein a ratio between the fourth flow area (A4) and the second flow area (A2) is within a range 0.8 -1.2, such as 0.9-1.1.

6. The steam separator according to any of the preceding claims, wherein the first portion (3) and the at least one steam discharge conduit (6a, 6b) are formed by concentric inner (7) and outer tubes (8), the at least one steam discharge conduit (6a, 6b) being formed by a space between the inner and outer tubes.

7. The steam separator according to claim 6, wherein the at least one steam discharge conduit (6a, 6b) is formed only along a respective portion of the circumference of the inner tube (7).

8. The steam separator according to claim 6 or 7, wherein the at least one steam discharge conduit (6a, 6b) each comprises an outlet (6a", 6b") being formed as a through hole through the outer tube (8), and wherein a respective steam transport conduit (9a, 9b) is connected to said outlet.

9. The steam separator according to any of claims 6-8, wherein the third portion (5) is formed integrally with said outer tube (8).

10. The steam separator according to any of the preceding claims, wherein the first portion (3) is provided with throttling means, for instance by tapering towards the second portion (4) along at least part of a longitudinal length of the first portion.

## Patentansprüche

1. Dampfabscheider (1) zum Abscheiden von Dampf aus einem Strom, der Dampf und zellulosehaltiges Material umfasst, wobei der Dampfabscheider Folgendes umfasst:
- einen im Wesentlichen röhrenförmigen Körper (2), durch den der Strom in einer Längsdurchflussrichtung befördert wird, wobei der Körper einen ersten, einen zweiten und einen dritten Abschnitt (3, 4, 5), die in Längsrichtung aufeinanderfolgen, umfasst, und
- mindestens eine Dampfablassleitung (6a, 6b),
wobei ein stromabwärts gelegenes Ende (3b) des ersten Abschnitts (3), das dem zweiten Abschnitt (4) gegenüberliegt, einen ersten Durchflussquerschnitt (A1) aufweist, der kleiner ist als ein zweiter Durchflussquerschnitt (A2) eines stromaufwärts gelegenen Endes (4a) des zweiten Abschnitts (4), das dem ersten Abschnitt (3) gegenüberliegt,
wobei ein stromabwärts gelegenes Ende (4b) des zweiten Abschnitts (4), das dem dritten Abschnitt (5) gegenüberliegt, einen dritten Durchflussquerschnitt (A3) aufweist, der kleiner ist als ein vierter Durchflussquerschnitt (A4) eines stromaufwärts gelegenen Endes (5a) des dritten Abschnitts (5), das dem zweiten Abschnitt (4) gegenüberliegt, und
wobei die mindestens eine Dampfablassleitung (6a, 6b) in Radialrichtung außerhalb des ersten Abschnitts (3) angeordnet ist, wobei jede Dampfablassleitung (6a, 6b) mit ihrem Einlass (6a') versehen ist, der mit dem stromaufwärts gelegenen Ende (4a) des zweiten Abschnitts (4) verbunden ist, um Dampf aus demselben aufzunehmen.

2. Dampfabscheider nach Anspruch 1, wobei sich der zweite Abschnitt (4) zumindest teilweise zu dem dritten Abschnitt hin verjüngt.

3. Dampfabscheider nach Anspruch 1, wobei der zweite Abschnitt (4) einen stromaufwärts gelegenen Abschnitt (4'), der sich zu dem dritten Abschnitt (5) hin verjüngt, und einen stromabwärts gelegenen Abschnitt (4") mit einem im Wesentlichen konstanten Durchflussquerschnitt umfasst.

4. Dampfabscheider nach einem der vorhergehenden Ansprüche, wobei ein Verhältnis zwischen dem ersten Durchflussquerschnitt (A1) und dem dritten Durchflussquerschnitt (A3) innerhalb eines Bereichs von 0,8 bis 1,2, wie beispielsweise 0,9 bis 1,1, liegt.

5. Dampfabscheider nach einem der vorhergehenden Ansprüche, wobei ein Verhältnis zwischen dem vierten Durchflussquerschnitt (A4) und dem zweiten Durchflussquerschnitt (A2) innerhalb eines Bereichs von 0,8 bis 1,2, wie beispielsweise 0,9 bis 1,1, liegt.

6. Dampfabscheider nach einem der vorhergehenden Ansprüche, wobei der erste Abschnitt (3) und die mindestens eine Dampfablassleitung (6a, 6b) durch eine innere (7) und eine konzentrische äußere Röhre (8) gebildet werden, wobei die mindestens eine Dampfablassleitung (6a, 6b) durch einen Raum zwischen der inneren und der äußeren Röhre gebildet wird.

7. Dampfabscheider nach Anspruch 6, wobei die mindestens eine Dampfablassleitung (6a, 6b) nur entlang eines jeweiligen Abschnitts des Umfangs der inneren Röhre (7) geformt ist.

8. Dampfabscheider nach Anspruch 6 oder 7, wobei die mindestens eine Dampfablassleitung (6a, 6b) jeweils einen Auslass (6a", 6b") umfasst, der als ein Durchgangsloch durch die äußere Röhre (8) geformt ist, und wobei eine jeweilige Dampftransportleitung (9a, 9b) mit dem Auslass verbunden ist.

9. Dampfabscheider nach einem der Ansprüche 6 bis 8, wobei der dritte Abschnitt (5) integral mit der äußeren Röhre (8) geformt ist.

10. Dampfabscheider nach einem der vorhergehenden Ansprüche, wobei der erste Abschnitt (3) mit Drosselungsmitteln versehen ist, zum Beispiel durch Verjüngung zu dem zweiten Abschnitt (4) hin entlang zumindest eines Teils der Länge des ersten Abschnitts in Längsrichtung.

## Revendications

1. Séparateur de vapeur (1) pour la séparation de vapeur d'avec un flux comprenant de la vapeur et un matériau cellulosique, ledit séparateur de vapeur comprenant :
- un corps substantiellement tubulaire (2) à travers lequel la vapeur est transportée dans une direction d'écoulement longitudinale, ledit corps comprenant des première, deuxième et troisième portions (3, 4, 5) longitudinalement consécutives, et
- au moins un conduit de décharge de vapeur (6a, 6b),
dans lequel une extrémité aval (3b) de la première portion (3) tournée vers la deuxième portion (4) présente une première section d'écoulement (A1) inférieure à une deuxième section d'écoulement (A2) d'une extrémité amont (4a) de la deuxième portion (4) tournée vers la première portion (3),
dans lequel une extrémité aval (4b) de la deuxième portion (4) tournée vers la troisième portion (5) présente une troisième section d'écoulement (A3) inférieure à une quatrième section d'écoulement (A4) d'une extrémité amont (5a) de la troisième portion (5) tournée vers la deuxième portion (4), et
dans lequel l'au moins un conduit de décharge de vapeur (6a, 6b) est agencé radialement à l'extérieur de la première portion (3), chaque conduit de décharge de vapeur (6a, 6b) étant disposé avec son entrée (6a') raccordée à l'extrémité amont (4a) de la deuxième portion (4) pour recevoir de la vapeur à partir de celle-ci.

2. Séparateur de vapeur selon la revendication 1, dans lequel la deuxième portion (4) est au moins partiellement effilée vers la troisième portion.

3. Séparateur de vapeur selon la revendication 1, dans lequel la deuxième portion (4) comprend une portion amont (4') effilée vers la troisième portion (5) et une portion aval (4") dotée d'une section d'écoulement substantiellement constante.

4. Séparateur de vapeur selon l'une quelconque des revendications précédentes, dans lequel un rapport entre la première section d'écoulement (A1) et la troisième section d'écoulement (A3) est compris dans une plage de 0,8 à 1,2, par exemple de 0,9 à 1,1.

5. Séparateur de vapeur selon l'une quelconque des revendications précédentes, dans lequel un rapport entre la quatrième section d'écoulement (A4) et la deuxième section d'écoulement (A2) est compris dans une plage de 0,8 à 1,2, par exemple de 0,9 à 1,1.

6. Séparateur de vapeur selon l'une quelconque des revendications précédentes, dans lequel la première portion (3) et l'au moins un conduit de décharge de vapeur (6a, 6b) sont formés par des tubes intérieur (7) et extérieur (8) concentriques, l'au moins un conduit de décharge de vapeur (6a, 6b) étant formé par un espace entre les tubes intérieur et extérieur.

7. Séparateur de vapeur selon la revendication 6, dans lequel l'au moins un conduit de décharge de vapeur (6a, 6b) est formé uniquement le long d'une portion respective de la circonférence du tube intérieur (7).

8. Séparateur de vapeur selon la revendication 6 ou 7, dans lequel l'au moins un conduit de décharge de vapeur (6a, 6b) comprend respectivement une sortie (6a", 6b") formée comme un trou traversant à travers le tube extérieur (8), et dans lequel un conduit de transport de vapeur (9a, 9b) respectif est raccordé à ladite sortie.

9. Séparateur de vapeur selon l'une quelconque des revendications 6 à 8, dans lequel la troisième portion (5) est formée intégralement avec ledit tube extérieur (8).

10. Séparateur de vapeur selon l'une quelconque des revendications précédentes, dans lequel la première portion (3) est dotée de moyens d'étranglement, par exemple en étant effilée vers la deuxième portion (4) le long d'au moins une partie d'une longueur longitudinale de la première portion.
